# EUROPEAN PATENT APPLICATION

(11) **EP 4 516 578 A1**
(43) Date of publication of application: **05.03.2025**
(21) Application number: 23204073.3
(22) Date of filing: 17.10.2023
(51) Int. Cl.: B60L 58/16, B60L 58/27, B60L 58/33, B60L 53/14, B60L 53/57, B60L 55/00, B60L 50/51, B60L 1/00, A47L 9/28, B25J 5/00, B25J 11/00, H01M 16/00

(54) **AUTONOMOUS MOBILE ROBOT EQUIPPED WITH RANGE EXTENDER USING FUEL CELL MODULE**

(30) Priority: 30.08.2023 KR 20230114432
(71) Applicant: Korea Energy Technology Group, Daejeon 43013 (KR)
(72) Inventor: KIM, Seon Hwa, 30064 Sejong-si (KR); LEE, Jongmyeong, 34168 Yuseong-gu (KR); KIM, Jinsol, 56032 Sunchang-gun (KR); ROH, Young Jin, 30064 Sejong-si (KR)
(74) Representative: dompatent von Kreisler Selting Werner - Partnerschaft von Patent- und Rechtsanwälten mbB

(57) **Abstract**

The present invention relates to an autonomous mobile robot equipped with a range extender using a fuel cell module in which a trailer is connected to a rear side of a robot body, the trailer including a fuel cell module that can charge a main battery provided in the robot body by generating electric energy to extend a movable range or a working time of the autonomous mobile robot.

According to the present invention relating to an autonomous mobile robot 1 equipped with a range extender 200 using a fuel cell module 220 in which the fuel cell module 220 is provided in a trailer 210 connected to a rear side of a robot body 100, the range extender being configured to charge the main battery 120 with electric energy generated in the fuel cell module 220 when a charge amount of the main battery 120 of the robot body 100 reaches a set remaining charge amount, the main battery 120 can be stably charged to extend a battery life, and not only can a movable range of the autonomous mobile robot 1 be extended, but also a workload can be significantly increased.

## Description

### BACKGROUND OF THE INVENTION

### Field of the Invention

The present invention relates to an autonomous mobile robot equipped with a range extender using a fuel cell module, and more specifically, an autonomous mobile robot including a trailer which is connected to a rear side of a robot body and in which a fuel cell module is provided, the fuel cell module enabling a main battery of the robot to be charged by generating electric energy to extend a movable range or a working time of the autonomous mobile robot.

### Description of the Related Art

Autonomous mobile robots (AMRs) are used in various industries, and application thereof is continuously expanding.

The autonomous mobile robots are used to automate a manufacturing process and improve productivity in the manufacturing process. In addition, in the logistics and warehouse management fields, the autonomous mobile robots also play a role in efficient processing and storage of goods in large warehouses or logistics centers by automating logistics operations such as moving, sorting, and packaging of goods. In addition, the autonomous mobile robots are increasingly being used in the service industry and for public safety and security operations such as fire suppression, rescue operations, and bomb removal.

The autonomous mobile robots can harvest or plant crops. This enables the productivity of agricultural work to increase and a problem of labor shortage to be solved, and thus application thereof in agriculture is also increasing.

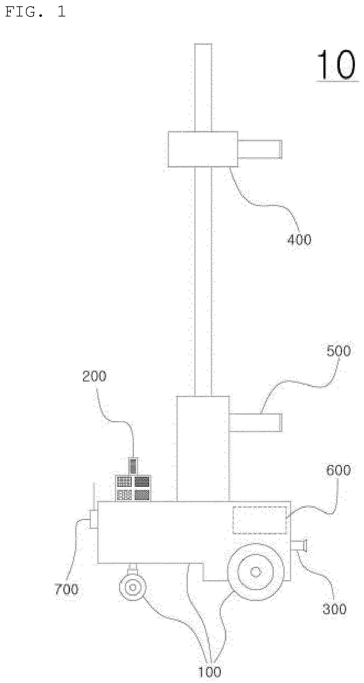

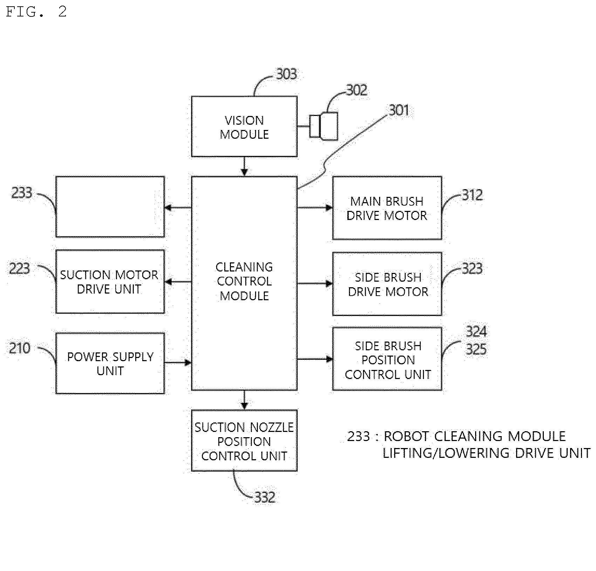

In particular, the autonomous mobile robots can be more effectively used for automated agriculture such as smart farms. Examples of the autonomous mobile robots include a mushroom management robot for a smart farm (hereinafter referred to as `Related Art 1') disclosed in Korean Patent Unexamined Publication No. 1020210014330 and a robot cleaner for a smart farm (hereinafter referred to as 'Related Art 2') disclosed in Korean Patent Registration No. 102410452 as illustrated in FIGS. 1 and 2, respectively.

The autonomous mobile robots used in various industrial fields as described above are usually powered by batteries, and even though the autonomous mobile robots are equipped with large-capacity batteries, a problem arises in that it is difficult to ensure a movable range of a certain distance or longer.

Although the development of battery technologies leads to a gradual increase in movable range, there is still a limit on an increase in movable range and working time by charging batteries, and thus there is a limit on improvement in productivity or work efficiency.

In addition, in a case of high battery consumption, the autonomous mobile robots usually return to a charging station and are recharged before battery discharge; however, a problem arises in that the continuity of work cannot be maintained due to a long charging time, and another problem also arises in that overdischarge results in a decrease in battery life.

### Citation List

### Patent Literature

Patent Literature 1: Korean Patent Unexamined Publication No. 1020210014330 (February 9, 2021, Unexamined Publication)
Patent Literature 2: Korean Patent Registration No. 102410452 (June 17, 2022, Publication)

### SUMMARY OF THE INVENTION

In order to solve the above-described problems, an object of the present invention is to provide an autonomous mobile robot equipped with a range extender using a fuel cell module that can quickly charge before a main battery is discharged such that a movable range of the autonomous mobile robot can be extended and a working time can be increased.

Another object of the present invention is to provide an autonomous mobile robot equipped with a range extender using a fuel cell module that adjusts a charging time of the main battery using a fuel cell module in consideration of an external temperature and a load condition of the autonomous mobile robot so that the autonomous mobile robot can stably move or perform work and can prevent a service life of a main battery from being shortened.

An autonomous mobile robot 1 equipped with a range extender using a fuel cell module of the present invention to achieve the objects described above includes: a robot body 100 capable of autonomous driving; and a range extender 200 connected through a coupling 102 to the robot body 100. Here, the robot body 100 includes: a drive motor 150; a main battery 120 electrically connected to the drive motor 150; and a control unit 500. The range extender 200 includes: a trailer 210; and a fuel cell module 220 that is provided inside the trailer 210 and is capable of generating electric energy. The fuel cell module 220 is configured to be electrically connected to the main battery 120 and charge the main battery 120 when a remaining charge level value of the main battery 120 is less than or equal to a set value.

In addition, the autonomous mobile robot may further include a heat exchanger 130 that is provided on at least one side of the main battery 120 and is capable of adjusting a temperature of the main battery 120.

In addition, the autonomous mobile robot may further include a connection tube 270 that is connected to the robot body 100 and the trailer 210 to allow the robot body and the trailer to communicate with each other. When an external temperature of the main battery 120 is lower than a set temperature, the connection tube 270 may be configured to transfer, to the main battery 120, heat energy generated when electric energy is generated in the fuel cell module 220.

In addition, the control unit 500 may include: an autonomous mobile module 520; a communication module 530; a drive motor management module 540; a fuel cell operation module 550; and a battery management module 600.

In addition, the battery management module 600 may monitor voltage, a current, and an external temperature of the main battery 120. The drive motor management module 540 may monitor a load due to working and moving of the robot body 100. The fuel cell operation module 550 may be configured to set the remaining charge level value to vary depending on the external temperature of the main battery 120 and a load of the autonomous mobile robot monitored by the battery management module 600 and the drive motor management module 540, respectively.

In addition, the battery management module 600 may be configured to manage a service life and a duration time of the main battery 120.

In addition, the robot body 100 may be configured to perform a task in a smart farm.

### BRIEF DESCRIPTION OF THE DRAWINGS

FIG. 1 illustrates a mushroom management robot for a smart farm of Related Art 1.
FIG. 2 is a block diagram illustrating a configuration of a robot cleaner for a smart farm of Related Art 2.
FIG. 3 illustrates an autonomous mobile robot equipped with a range extender using a fuel cell of the present invention.
FIG. 4 illustrates a configurational diagram of the autonomous mobile robot of the present invention.
FIG. 5 is a configurational diagram of a control unit according to the present invention.
FIG. 6 is a conceptual graph of prediction of a battery life.

### DETAILED DESCRIPTION OF THE PREFERRED EMBODIMENTS

Hereinafter, the present invention will be described with reference to the accompanying drawings. However, the present invention can be realized as various different aspects and thus is not limited to embodiments to be described herein.

In the entire specification, when a certain part "is connected to (accesses, is in contact with, or is coupled to)" another part, this includes not only a case where the parts are "directly connected" to each other, but also a case where the parts are "indirectly connected" to each other with another member interposed therebetween. In addition, when a certain part "comprises" a certain configurational element, this means that another configurational element is not excluded but the other configurational element can be further included, unless specifically described otherwise.

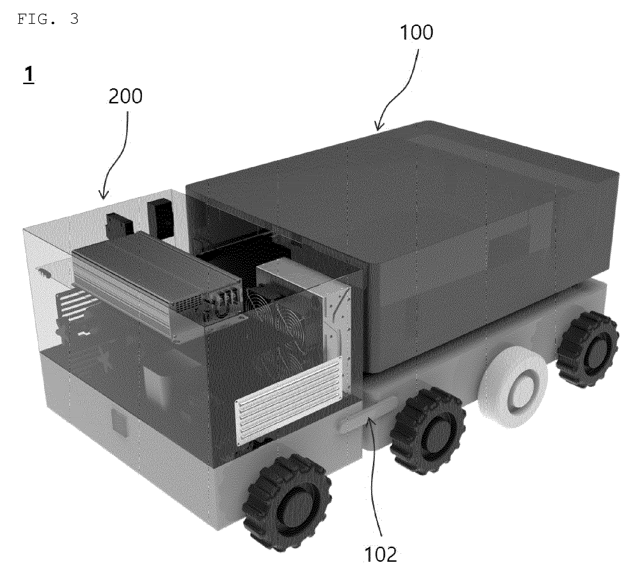

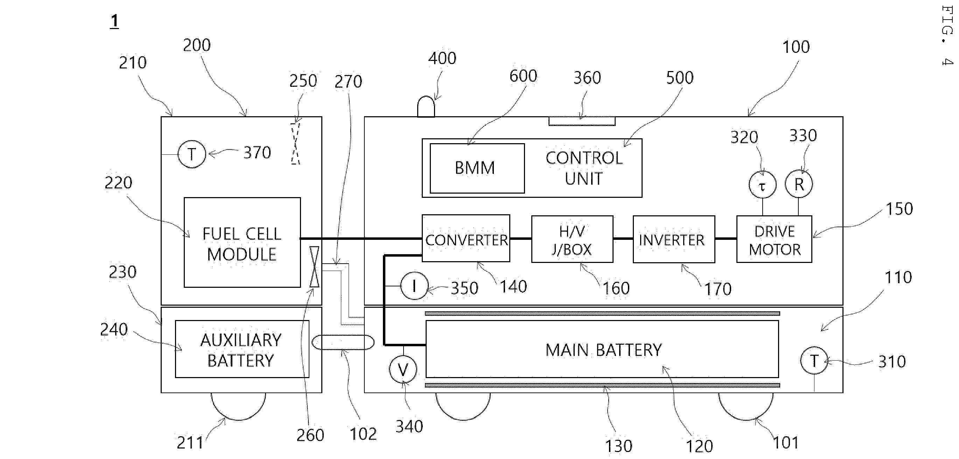

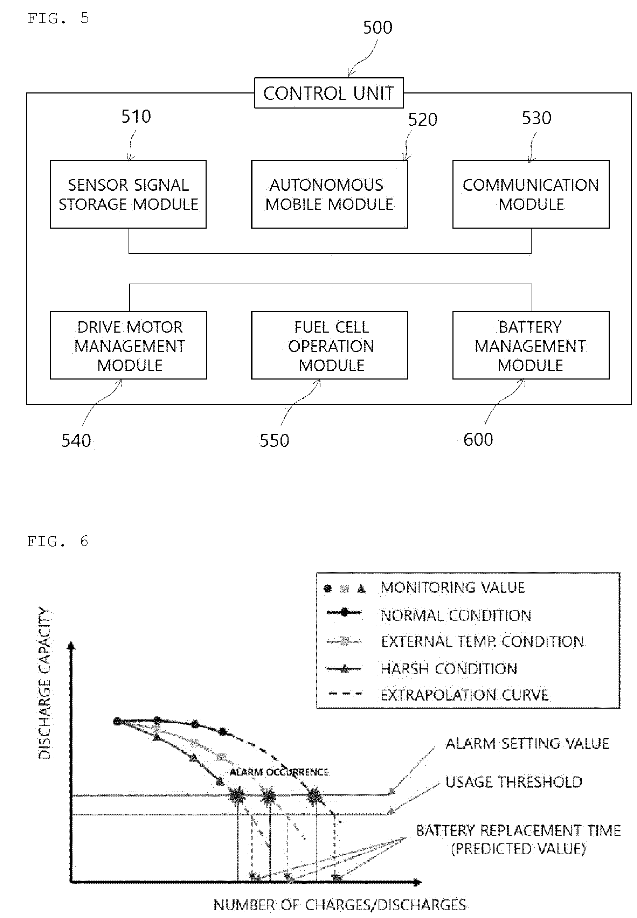

FIG. 3 is a perspective view of an autonomous mobile robot 1 equipped with a range extender using a fuel cell according to the present invention, FIG. 4 is a configuration diagram of the autonomous mobile robot 1 according to the present invention, FIG. 5 is a block diagram of a configuration of a control unit 500 according to the present invention, and FIG. 6 is a conceptual graph of prediction of a battery life.

As illustrated in FIGS. 3 and 4, the autonomous mobile robot 1 equipped with a range extender using a fuel cell according to the present invention includes: a robot body 100; and a range extender 200 in which a fuel cell module 220, that is a range extender, is provided is connected through a coupling 102 to the robot body.

The range extender 200 is connected through the coupling 102 to a rear side of the robot body 100 as illustrated in FIGS. 3 and 4.

The range extender 200 includes a trailer 210 that can be detachably coupled to the robot body 100 and a fuel cell module 220 that is provided inside the trailer 210 and is capable of generating electric energy. The trailer 210 is equipped with a trailer wheel 211 at a lower part thereof and can be formed to move together with the drive of the robot body 100.

Similarly to a common hydrogen fuel cell system, the fuel cell module 220 provided in the trailer 210 can include a hydrogen tank (not illustrated) and a fuel cell stack (not illustrated) and is configured to generate electrical energy by using a chemical reaction between hydrogen and oxygen.

A main reaction of a hydrogen fuel cell is a combination of hydrogen and oxygen to produce water, and since this reaction is an exothermic reaction, heat is usually generated during a process of generating electricity in the hydrogen fuel cell. Since heat energy generated by an operation of the fuel cell module 220 as described above can reduce the efficiency of the fuel cell, it is preferable to discharge the heat energy by using a cooling device such as an exhaust fan 250 as illustrated in FIG. 4.

The trailer 210 may be additionally equipped with a auxiliary battery 240 as needed as illustrated in FIG. 4. The auxiliary battery 240 may be provided inside a auxiliary battery housing 230 and can be configured to be charged with the fuel cell module 220.

The robot body 100 is an autonomous mobile robot and includes a drive motor 150 and a main battery 120 for driving the drive motor 150.

The main battery 120 is usually provided at a lower part of the robot body 100, and the main battery 120 can be provided inside a main battery housing 110 as illustrated in FIG. 4.

The robot body 100 is equipped with at least a pair of body wheels 101 driven by the drive motor 150, and multiple sensors (not illustrated) can be additionally provided for avoiding an obstacle during autonomous moving. Here, the multiple sensors (not illustrated) can include a camera, a radar sensor, an acceleration sensor, a position sensor, a gyro sensor, a lidar sensor, or the like that are usually installed in the autonomous mobile robot (AMR) to detect a surrounding situation.

In addition, the robot body 100 can additionally have a configuration for specific work such as smart farm work, structure vibration measurement, and the like.

A heat exchanger 130 can be installed on at least one side of the main battery 120 as illustrated in FIG. 4.

The normal operation temperature range of lithium-ion batteries is generally from -20°C to 60°C. This range is the temperature range in which most commercial lithium-ion batteries can operate stably and exhibit optimal performance.

However, if the battery is used at a temperature that is too low even in the above-described temperature range, a chemical reaction rate inside the battery can be lowered, and power supply capacity can be reduced. A low temperature results in a slow chemical reaction, especially a role of an electrolyte is rapidly reduced, and thus a movement speed lithium ions is also lowered. Eventually, the voltage is lowered, and the amount of generated energy decreases. Consequently, performance of the battery can be degraded, and the battery can be discharged quickly.

Even at a temperature too high, the chemical stability of the battery can be degraded, and thus a service life of the battery can be shortened.

On the other hand, when the battery is charged, it is generally preferable to charge the battery within a more restrictive temperature range from 0°C to 45°C. In an environment in which the battery is used as described above, it is important to comply with a temperature restriction to maintain the best performance and safety.

Preferably, the heat exchanger 130 is operated to maintain the normal operation temperature range and a normal charging temperature range in which the main battery 120 can exhibit the normal and optimal performance.

The heat exchanger 130 can be used for cooling when an external temperature of the main battery 120 is higher than the normal operation temperature and can also be used for raising a temperature when the external temperature is lower than the normal operation temperature, like winter.

When the external temperature is lower than the normal operation temperature of the main battery 120, such as a temperature in winter, the temperature can be raised by using heat generated when electrical energy is generated in the fuel cell module 220.

In this respect, as illustrated in FIG. 4, a connection tube 270 are additionally provided to allow the robot body 100 and the trailer 210 to communicate with each other.

More specifically, the connection tube 270 is configured to allow a space in which the fuel cell module 220 is installed in the trailer 210 and the main battery housing 110 in which the main battery 120 is installed to communicate to each other.

The connection tube 270 is normally closed, and when the external air of the main battery needs to be heated, like winter, the connection tube 270 is configured to be open when the electric energy is generated in the fuel cell module 220 to allow heat energy generated from the fuel cell module 220 to be transmitted to the main battery 120. At this time, a blower fan 260 can be additionally provided as illustrated in FIG. 4 to cause the heat to be smoothly transmitted along the connection tube 270 toward the main battery.

The robot body 100 can be equipped with a DC-DC converter 140 and a DC-AC inverter 170 as illustrated in FIG. 4.

The DC-DC converter 140 is configured to electrically connect the fuel cell module 220 and the main battery 120 to each other and is used to charge the main battery 120 with electric energy generated in the fuel cell module 220 at voltage that is suitable for the main battery.

The DC-AC inverter 170 is provided between the main battery 120 and the drive motor 150 and is configured to convert a DC current of the main battery 120 into an AC current required to drive the drive motor 150.

A high-voltage junction box 160 can be additionally provided between the main battery 120 and the drive motor 150 such that electrical connection and installation can be simply managed as illustrated in FIG. 4.

The robot body 100 can be equipped with a communication unit 400 as illustrated in FIG. 4. Preferably, the communication unit 400 is configured to transmit and receive data to and from an external system or an external server (not illustrated).

The robot body 100 is equipped with a control unit 500, and the control unit 500 can include: a sensor signal storage module 510; an autonomous mobile module 520; a communication module 530; a drive motor management module 540; a fuel cell operation module 550; and a battery management module 600 as illustrated in FIG. 5.

The sensor signal storage module 510 is a module that stores signals of various sensors installed for the work and the operations.

As illustrated in FIG. 4, the autonomous mobile robot 1 of the present invention can be equipped with a first temperature sensor 310 for measuring the external temperature of the main battery 120, a second temperature sensor 370 for measuring a temperature change in the trailer 210 due to heat energy generated when the fuel cell module 220 generates electric energy, a torque sensor 320 and a revolution speed sensor 330 for measuring torque and a revolution speed of the drive motor 150, a current sensor 350 and a voltage sensor 340 installed to measure a current and voltage of the main battery 120, and a load cell 360 capable of measuring a load on the autonomous mobile robot 1. In addition, various other sensors (not illustrated) necessary for the operation and moving of the autonomous mobile robot 1, such as a camera, a radar sensor, an acceleration sensor, a position sensor, a gyro sensor, a lidar sensor, or the like can be installed, and signals of the various sensors can also be stored in the sensor signal storage module 510.

Preferably, the autonomous mobile module 520 is a module that generates a path for the autonomous mobile robot 1 of the present invention to move to a desired location and enables the autonomous mobile robot to move along the path, and it is preferable to utilize signals of various sensors necessary for moving or an operation among the sensor signals stored in the sensor signal storage module 510, .

The communication module 530 is a module that manages data transmitted and received through the communication unit 400.

The drive motor management module 540 is a module that monitors a state of the drive motor 150 and is configured to monitor the torque and the revolution speed of the drive motor 150 simultaneously.

The torque and the revolution speed of the drive motor 150 are measured and monitored by the torque sensor 320 and the revolution speed sensor 330.

The load of the autonomous mobile robot 1 can include the load on the autonomous mobile robot 1 and a state of a road surface on which the autonomous mobile robot 1 is moving, for example, a slope, a bend, or a road surface with high friction.

A magnitude of the load on the autonomous mobile robot 1 can be checked by measuring a signal of the load cell 360 and, in addition, a final load reflecting a moving road surface state or the like such as a slope or a road surface with a large friction force can be derived from the torque and the number of revolutions (rpm) of the drive motor 150.

In this case, the signals of the torque sensor 320, the revolution speed sensor 330, and the load cell 360 can be directly measured by the drive motor management module 540, or the signals can be received from the sensor signal storage module 510.

Preferably, in a case where a large load is applied to the autonomous mobile robot 1, the torque and power consumption of the drive motor 150 increase and the amount of hourly discharge of the main battery 120 also increase, so it is preferable that the drive motor management module 540 be also configured to monitor these characteristics.

The battery management module 600 monitors voltage (V), a current (I), an external air temperature (T), and the number of charges and discharges of the battery for monitoring and managing a deterioration level (state of Health (SOH) or a current battery life state) and a charge state (state of charge (SOC) or a current charging and discharging state of the battery) of the battery.

Preferably, a charge/discharge battery (example: lithium-ion battery), such as the main battery 120 of the present invention, gradually deteriorates when the battery is charged and discharged repeatedly (that is, when a charging and discharging cycle is repeated) as illustrated in FIG. 6, and the battery life gradually decreases due to a decrease in discharge capacity. Hence, when the discharge capacity reaches a use limit level or lower, it is preferable to replace the battery.

On the other hand, a problem arises in that as a common battery deteriorates, the capacity of the battery is reduced and a discharge rate of the battery increases.

Since overcharge of the battery is one of main causes of reducing the service life of the battery, the battery management module 600 can include an overcharge preventive module (not illustrated) in consideration of a reduction in battery capacity depending on a deterioration degree of the main battery 120.

In the case of the main battery 120 that has deteriorated due to frequent charge and discharge, the overcharge preventive module (not illustrated) does not check the initial capacity of the main battery 120 but checks the reduced charge capacity due to deterioration and charges the battery by an amount corresponding to the reduced charge capacity, thereby preventing the overcharge.

The fuel cell operation module 550 is configured to charge the main battery 120 by operating the fuel cell module 220 when a charged level is lower than and equal to at least a set remaining charge level value of the main battery 120.

Preferably, the set remaining charge level value of the main battery 120 is set to a value corresponding to a remaining charge amount which does not correspond to overdischarge and with which the autonomous mobile robot 1 can move or work such that a replacement time of the main battery 120 or the battery life is minimally affected.

At this time, in a case where the set remaining charge level value is set to only one remaining charge amount, a problem of a decrease in battery life or replacement time arises. Hence, the fuel cell operation module 550 of the present invention is configured to adjust the set remaining charge level value depending on an operation condition of the autonomous mobile robot 1, an deterioration level of the battery, and the like. That is, the fuel cell operation module 550 is configured to select a remaining charge level value of starting the operation of the fuel cell module 220 to vary varies depending on the operation condition of the autonomous mobile robot 1, the deterioration level of the main battery 120, and the like.

First, as can be known from FIG. 6, the battery replacement time or the battery life can vary depending on the external conditions related to the temperature of the battery, and in addition, when the external temperature of the battery is higher or lower than the normal operation temperature of the battery, the performance of the battery can be degraded and the battery can be quickly discharged.

In an external temperature range in which the main battery 120 is quickly discharged due to the phenomenon described above, if the operation of the fuel cell module 220 is started from a time when the remaining charge amount of the main battery 120 reaches the set remaining charge level value in the normal use temperature range to generate electric energy and charge the main battery 120 with the electric energy, a discharge rate of the main battery 120 can be higher than a charge rate at the beginning of charging, and thus, overdischarge of the main battery 120 can occur.

Hence, adjustment is required when setting the remaining charge level value at which the battery starts to be charged in consideration of the discharge rate due to the external temperature. That is, it is preferable to set to a level value higher than the remaining charge level value set in the normal temperature range in the external temperature range in which the performance of the battery is degraded and the battery is quickly discharged, start the operation of the fuel cell module 220 earlier, and charge the main battery 120, so that the overdischarge of the main battery 120 can be prevented from occurring.

On the other hand, the performance of the battery is degraded as the battery deteriorates due to frequent discharge and charge, and the performance is degraded not only because the rechargeable capacity decreases, but also because the discharge is faster under the same conditions.

Hence, it is necessary to consider a performance degradation phenomenon in which the deteriorated main battery 120 is quickly discharged even in a case with the same external conditions, and the fuel cell operation module 550 of the present invention can have a configuration in which the remaining charge level value at which battery charge is started is set to a higher level value than that set in the normal conditions in consideration of the deterioration of the main battery 120.

Finally, as described in the drive motor management module 540, even in a case where the load on the autonomous mobile robot 1 is significant during working or moving, a lot of electric power is consumed, and thus the main battery 120 is quickly discharged.

Hence, as described above, even if the main battery 120 is charged with electric energy generated by starting the operation of the fuel cell module 220 at the normal remaining charge level value set in the normal temperature range, the overdischarge of the main battery 120 can occur.

In consideration of this, the fuel cell operation module 550 of the present invention can have a configuration in which the remaining charge level value at which the main battery 120 is charged with the electric energy generated by starting the operation of the fuel cell module 220 to be different from the level value in the normal temperature range depending on a magnitude of the load.

That is, the fuel cell operation module 550 can have a configuration in which a remaining charge level value higher than the normal remaining charge level value is set for high-load work or moving that cause quick discharge of the main battery 120 to start the operation of the fuel cell module 220 more quickly and charge the main battery 120, and thereby the overdischarge of the main battery 120 is prevented from occurring.

Individual remaining charge level values of the main battery 120 at which the operation of the fuel cell module 220 is started can be set through an experiment, etc., and can be converted into data and stored in the fuel cell operation module 550 in advance, with respect to the external temperature and the deterioration level of the main battery 120 and the load condition of the autonomous mobile robot 1. In addition, the results can be converted into data through machine learning and the like and stored in the fuel cell operation module 550. In this case, when individual remaining charge level values are converted into data by using machine learning, more accurate remaining charge level value can be set by performing the machine learning using the data generated each time the autonomous mobile robot 1 is operated.

When the remaining charge level value of the main battery 120 reaches the remaining charge level value set in the corresponding conditions of the external temperature, the deterioration level, and the load while the battery management module 600 and the drive motor management module 540 monitor the external temperature and the deterioration level of the main battery 120 and the load on the autonomous mobile robot 1, respectively, the fuel cell operation module 550 starts the operation of the fuel cell module 220 to generate the electric energy and charges the main battery 120 that needs to be charged with the electric energy.

As described above, the autonomous mobile robot 1 can more stably perform the moving and working for a long time by operating the fuel cell module 220 to generate electric energy and charging the main battery 120 with the electric energy, the service life of the main battery 120 can be extended, and also the replacement time can be accurately designated.

As described above, the present invention is not limited to each of the above-described embodiments, and it is possible for a person with ordinary skill in the art to which the invention pertains to modify the present invention without departing from the scope of the claims of the present invention, and such an example obtained by modifying the present invention is included within the scope of the present invention.

There is provided an autonomous mobile robot 1 equipped with a range extender 200 using a fuel cell module 220 according to the present invention in which the fuel cell module 220 is provided in a trailer 210 connected to a rear side of a robot body 100, the range extender being configured to charge the main battery 120 with electric energy generated in the fuel cell module 220 when a charge amount of the main battery 120 of the robot body 100 reaches a set remaining charge amount, and thus the autonomous mobile robot is advantageous in that the main battery 120 can be stably charged to extend a battery life, and not only can a movable range of the autonomous mobile robot 1 be extended, but also a workload can be significantly increased.

In addition, since the electric energy is generated by the fuel cell module 220 of the trailer 210 and the main battery 120 is directly charged before the main battery 120 of the robot body 100 is discharged, the autonomous mobile robot 1 according to the present invention is advantageous in that the continuity and the productivity of moving and working can be significantly improved.

In addition, the autonomous mobile robot 1 according to the present invention is configured to set a remaining charge level value, which starts an operation of the fuel cell module 220 for charging the main battery 120, to vary depending on an external temperature and a deterioration level of the main battery 120, a load applied to the autonomous mobile robot 1, or the like which affect a discharge rate of the battery. Hence, performance degradation of the main battery 120 is minimized, and the autonomous mobile robot is advantageous in that the main battery 120 can be more stably charged.

In addition, the autonomous mobile robot 1 according to the present invention monitors the number of charges/discharges of the battery by the battery management system 600, manages a battery operating temperature and prevention of overdischarge of the battery, and predicts a service life or a replacement time of the battery, thus, being advantageous in that the autonomous mobile robot can more stably move and perform work.

In addition, the autonomous mobile robot 1 according to the present invention is configured to transfer, to the main battery 120 side, heat generated when the fuel cell module 220 in the trailer 210 generates electric energy such that a temperature of the main battery 120 can quickly return to a normal operation temperature, together with the heat exchanger 130. Hence, the autonomous mobile robot has an advantage of more effective prevention of performance degradation of the main battery 120 due to a low temperature in winter.

While the present invention has been described with respect to the specific embodiments, it will be apparent to those skilled in the art that various changes and modifications may be made without departing from the spirit and scope of the invention as defined in the following claims.

## Claims

1. An autonomous mobile robot equipped with a range extender using a fuel cell module, comprising:
a robot body 100 capable of autonomous driving; and
a range extender 200 connected through a coupling 102 to the robot body 100,
wherein the robot body 100 includes:
a drive motor 150;
a main battery 120 electrically connected to the drive motor 150; and
a control unit 500,
wherein the range extender 200 includes:
a trailer 210; and
a fuel cell module 220 that is provided inside the trailer 210 and is capable of generating electric energy,
wherein the fuel cell module 220 is configured to be electrically connected to the main battery 120 and charge the main battery 120 when a remaining charge level value of the main battery 120 is less than or equal to a set value.

2. The autonomous mobile robot equipped with a range extender using a fuel cell module according to claim 1, further comprising:
a heat exchanger 130 that is provided on at least one side of the main battery 120 and is capable of adjusting a temperature of the main battery 120.

3. The autonomous mobile robot equipped with a range extender using a fuel cell module according to claim 1 or 2, further comprising:
a connection tube 270 that is connected to the robot body 100 and the trailer 210 to allow the robot body and the trailer to communicate with each other,
wherein, when an external temperature of the main battery 120 is lower than a set temperature, the connection tube 270 is configured to transfer, to the main battery 120, heat energy generated when electric energy is generated in the fuel cell module 220.

4. The autonomous mobile robot equipped with a range extender using a fuel cell module according to claim 1,
wherein the control unit 500 includes:
an autonomous mobile module 520;
a communication module 530;
a drive motor management module 540;
a fuel cell operation module 550; and
a battery management module 600.

5. The autonomous mobile robot equipped with a range extender using a fuel cell module according to claim 4,
wherein the battery management module 600 monitors voltage, a current, and an external temperature of the main battery 120,
wherein the drive motor management module 540 monitors a load depending on an operation and moving of the robot body 100, and
wherein the fuel cell operation module 550 is configured to set the remaining charge level value to vary depending on the external temperature of the main battery 120 and a load of the autonomous mobile robot monitored by the battery management module 600 and the drive motor management module 540, respectively.

6. The autonomous mobile robot equipped with a range extender using a fuel cell module according to claim 4 or 5,
wherein the battery management module 600 is capable of managing a service life and a duration time of the main battery 120.

7. The autonomous mobile robot equipped with a range extender using a fuel cell module according to claim 1,
wherein the robot body 100 is configured to perform a task in a smart farm.
